# EUROPÄISCHE PATENTSCHRIFT

(11) **EP 3 357 881 B1**
(45) Veröffentlichungstag und Bekanntmachung des Hinweises auf die Patenterteilung: **04.11.2020**
(21) Anmeldenummer: 18154934.6
(22) Anmeldetag: 02.02.2018
(51) Int. Cl.: F24C 15/04, C03C 17/34, C03C 17/00

(54) **BESCHICHTETE SCHUTZVERGLASUNG**
COATED PROTECTIVE GLAZING
VITRAGE DE PROTECTION REVÊTU

(30) Priorität: 07.02.2017 DE 102017102377
(43) Veröffentlichungstag der Anmeldung: 08.08.2018
(73) Patentinhaber: SCHOTT AG, 55122 Mainz (DE)
(72) Erfinder: HENN, Christian, 55546 Frei-Laubersheim (DE); RUDIGIER-VOIGT, Dr. Eveline, 55128 Mainz (DE); KÖHLER, Dr. Daniel, 63654 Büdingen (DE); KLIPPE, Dr. Lutz, 65185 Wiesbaden (DE)
(74) Vertreter: Blumbach · Zinngrebe Patentanwälte PartG mbB

(56) Entgegenhaltungen:
- EP-A1- 1 329 307
- EP-B1- 1 503 967
- WO-A1-2012/036720

## Beschreibung

Die Erfindung betrifft allgemein Schutzverglasungen. Insbesondere betrifft die Erfindung Schutzverglasungen mit infrarotreflektierenden Beschichtungen.

Thermische Schutzverglasungen werden im Allgemeinen dazu eingesetzt, einen beheizten Raum von der Umgebung thermisch zu isolieren und dabei gleichzeitig ein Sichtfenster in den beheizten Raum zu schaffen. Typische Anwendungen sind neben Brandschutzverglasungen im Bereich der Architektur auch Verglasungen im Bereich Backofen- und Kaminsichtscheiben, sowie allgemein Ofensichtscheiben.

Die EP 1 503 967 B1 beschreibt ein transparentes Substrat, welches mit einer Schichtanordnung versehen ist, die zumindest eine transparente, leitfähige Schicht umfasst. Die Schichtanordnung weist weiterhin eine Schutzschicht aus ZnSnOx oder einem Nitrid oder Oxynitrid von Aluminium auf.

Aus der WO 2012/036720 A1 ist weiterhin eine infrarotreflektierende Beschichtung mit einer dünnen Silber- oder Goldschicht bekannt. Diese Schicht ist zwischen einer substratseitigen dotierten Zinkoxidschicht und einer abdeckenden dielektrischen Schicht angeordnet.

Aus der EP 2 236 473 A1 ist eine Infrarot-Strahlung reflektierende Glas- oder Glaskeramikscheibe bekannt, die eine Antimon enthaltende Zinnoxidschicht als infrarotreflektierende Beschichtung aufweist. Eine solche Beschichtung zeichnet sich insbesondere dadurch aus, dass sie hochtemperaturstabil ist.

Die EP 2 243 750 betrifft eine transparente Glas- oder Glaskeramikscheibe, die ein Glas- oder Glaskeramiksubstrat mit einem thermischen Ausdehnungskoeffizienten von weniger als 4,2·10⁻⁶/K, sowie eine hochbrechende einschichtige Reflexionsschicht mit einer Brechzahl größer 2,2 umfasst. Die Einschicht-Reflexionsschicht umfasst Ti0₂, Nb₂0₅ oder Ta₂0₅.

In der WO 2012/041499 A2 wird eine Hitzeschutzverglasung beschrieben, die eine Hochtemperatur-Infrarotreflexionsfilter-Beschichtung auf einer Glas- oder Glaskeramikscheibe mit einem linearen Temperaturausdehnungskoeffizienten kleiner als 4,2·10⁻⁶/K umfasst. Auf zumindest einer Seite der Glas- oder Glaskeramikscheibe ist eine Titandioxid-Schicht abgeschieden, welche mit einem Übergangsmetall-Oxid dotiert ist, so dass die Titandioxid-Schicht einen Flächenwiderstand von höchstens 2MΩ aufweist. Die Titandioxid-Schicht weist eine Schichtdicke auf, deren optische Dicke einem Viertel der Wellenlänge des Maximums eines Schwarzkörperstrahlers mit einer Temperatur zwischen 400 °C und 3000 °C entspricht. Damit wirkt die Beschichtung zusätzlich interferenzoptisch für die Wärmestrahlung.

Weiterhin sind IR-reflektierende Systeme bekannt auf Basis (i) von sehr dünnen (< 100 nm Schichtdicke) metallischen Beschichtungen, wie bspw. Silber oder Gold, (ii) metallischer Gitter (sog. "metal mesh") oder (iii) kohlenstoffbasierten Systeme. Solche Systeme müssen in der Regel durch ein ergänzendes komplexes Mehrlagen-Schichtsystem geschützt werden, da Sie hohen Temperaturen nicht Stand halten sowie insbesondere nicht ausreichend temperaturstabil für den Dauerbetrieb beispielsweise eines Backofens oder Kamins sind.

Der Erfindung liegt die Aufgabe zugrunde, eine Schutzverglasung bereitzustellen, welche sich durch eine sehr hohe IR-Reflektivität (> 0,8) auszeichnet, dabei jedoch langzeitstabil gegenüber einer Degradation bei hohen Temperaturen (100 Stunden bei 500 °C) ist und durch einen möglichst einfachen Schichtaufbau realisiert werden kann. So ist eine Anwendung der Erfindung eine Verglasung eines Backofens, bevorzugt mit Pyrolyse-Funktion oder eine Kaminsichtscheibe sowie als Brandschutzverglasung. Bei der Pyrolyse-Reinigung treten Temperaturen von größer gleich 450 °C über längere Zeit (mindestens 100 Stunden), für einige Minuten je Reinigungszyklus auch größer 500 °C. Auch soll die Beschichtung möglichst farbneutral sein und der Farbort der Schicht über die Gesamtheit der Oberfläche möglichst wenig schwanken (der Abstand ΔE der Farborte im Lab-Farbsystem sollte möglichst kleiner als oder gleich 3 sein).

Die Aufgabe der Erfindung wird überraschend erfindungsgemäß mit einem transparenten leitfähigen Beschichtungsmaterial gelöst, welches an sich nicht hochtemperaturstabil ist. Die Lösung der Aufgabe ist im Einzelnen in den unabhängigen Ansprüchen angegeben. Vorteilhafte Ausgestaltungen und Weiterbildungen der Erfindung sind in den jeweiligen abhängigen Ansprüchen angegeben.

Dementsprechend sieht die Erfindung eine Schutzverglasung, insbesondere eine thermische Schutzverglasung vor, umfassend eine im sichtbaren Spektralbereich transparente Glas- oder Glaskeramikscheibe mit zwei gegenüberliegenden Seitenflächen,
sowie auf zumindest einer der Seitenflächen eine Beschichtung, welche Infrarot-Strahlung reflektiert, wobei die Beschichtung eine erste Schicht auf der Seitenfläche und eine zweite Schicht umfasst, welche auf der ersten Schicht aufgebracht ist, und wobei die erste Schicht aus einem transparenten leitfähigen Oxid (kurz: TCO), bevorzugt einem dotierten TCO, besonders bevorzugt einem dotierten Zinkoxid gebildet wird und die zweite Schicht eine Oxidschicht ist, bevorzugt eine dotierte Oxidschicht, besonders bevorzugt eine aluminiumhaltige Oxidschicht ist, oder wobei die zweite Schicht eine Nitridschicht ist, bevorzugt eine aluminiumhaltige Nitridschicht, besonders bevorzugt eine Silizium-Aluminium-Nitridschicht.

Die zweite Schicht ist erfindungsgemäß als amorphe, insbesondere als röntgenamorphe Oxidschicht oder Nitridschicht ausgebildet. Bei einer röntgenamorphen Schicht treten in Röntgen-Beugungsspektren keine scharfen Interferenzen auf, die sich deutlich, insbesondere um mehr als 10% des durchschnittlichen Untergrundsignals hervorheben. Stattdessen sind allenfalls diffuse Interferenzen bei kleinen Beugungswinkeln vorhanden.

Zur Herstellung einer erfindungsgemäßen Schutzverglasung ist ein Verfahren vorgesehen, bei welchem eine Glas- oder Glaskeramikscheibe mit zwei gegenüberliegenden Seitenflächen bereitgestellt und auf zumindest einer der Seitenflächen eine infrarotreflektierende Beschichtung aufgebracht wird, indem eine erste Schicht durch eine Vakuumbeschichtung, bevorzugt durch eine physikalische Gasphasenabscheidung, besonders bevorzugt durch Sputtern und auf der ersten Schicht eine zweite Schicht durch eine Vakuumbeschichtung, bevorzugt durch eine physikalische Gasphasenabscheidung, besonders bevorzugt durch Sputtern abgeschieden werden, wobei als erste Schicht eine transparente leitfähige Schicht, bevorzugt eine dotierte transparente leitfähige Oxidschicht, besonders bevorzugt eine transparente leitfähige dotierte Zinkoxidschicht und als zweite Schicht eine röntgenamorphe Oxidschicht, bevorzugt eine dotierte Oxidschicht, besonders bevorzugt eine aluminiumhaltige Oxidschicht, oder als zweite Schicht eine Nitridschicht aufgebracht werden. Für das Sputtern wird vorzugsweise Magnetron-Sputtern eingesetzt. Auch die Nitridschicht als zweite Schicht ist zur Erzielung einer guten Barrierewirkung insbesondere röntgenamorph ausgebildet.

Besonders bevorzugt als erste Schicht wird eine mit Aluminium, Gallium oder Molybdän dotierte Zinkoxidschicht. Insbesondere Aluminium wird im Hinblick auf die ebenfalls aluminiumhaltige abdeckende zweite Schicht favorisiert. Selbstverständlich können auch zwei oder auch alle drei der vorstehend genannten Dotanten kombiniert eingesetzt und in der Schicht vorhanden sein.

Als zweite Schicht ist eine Oxidschicht geeignet, insbesondere eine Aluminiumoxid-Schicht, besonders bevorzugt eine Aluminiumsilikatschicht, insbesondere in einem Bereich von 0 bis zu 95 Gewichtsprozent Silizium am Gesamtmassenanteil von Aluminium und Silizium, als AlSiOₓ besonders bevorzugt mit einem Verhältnis von Al zu Si zwischen 60 zu 40 Gewichtsprozent bis 40 zu 60 Gewichtsprozent.

In einer besonderen Ausführungsform kann vor Aufbringen der ersten Schicht eine Vorbehandlung des Substrates erfolgen. Diese Vorbehandlung kann entweder nasschemisch oder über die Gasphase erfolgen, wie bspw. eine Plasma- oder Corona-Behandlung. Durch die Vorbehandlung wird die Oberfläche des zu beschichtenden Substrates derart modifiziert, dass (i) die Oberfläche von etwaigen Verunreinigungen insbesondere organischen Verunreinigungen gereinigt wird, (ii) die Oberfläche aktiviert wird, was zu einer verbesserten Haftung führt, und/oder (iii) die Oberfläche gezielt von Alkalien ausgelaugt wird, was zu einer verbesserten Haftung bzw. Verhinderung der Diffusion von Fremdatomen in die erste Schicht führt.

Dotierte Zinkoxidschichten als transparente leitfähige Schichten sind bekannt, als n-dotierte Halbleiterschichten in Dünnschicht-Modulen, welche durch pn-Übergänge gekennzeichnet sind, wie beispielsweise in Solarzellen oder LEDs. Insbesondere für photovoltaische Systeme ist notwendig, dass diese Schichten eine hohe Transparenz aufweisen. Solche Anwendungen werden in der WO 2014/058726 A1 genauer beschrieben. Allerdings ist dieses Material nicht temperaturstabil und die Schichten degenerieren hinsichtlich der Leitfähigkeit bereits ab Temperaturen > 250 °C und besonders schnell bei Temperaturen oberhalb von 450 °C. Gerade Temperaturen > 400 °C sind aber notwendig, um etwa in einem Backofen eine Pyrolyse-Reinigung starten zu können. Für transparente leitfähige Oxide, besonders dotierte leitfähige Oxide, und insbesondere dotierte Zinkoxidschichten findet bei Temperaturen von 300 °C eine Absorption der freien Ladungsträger innerhalb dieser Schicht statt. Dies führt unmittelbar zu einer starken Reduktion der elektrischen Leitfähigkeit und damit zu einer reduzierten IR-Reflektivität. Hypothese für diese Beobachtung ist die thermisch induzierte Ausbildung von Defektzentren an den Korngrenzen der Schichten, an welchen die Ladungsträger rekombinieren. Es hat sich gezeigt, dass mit amorphen Siliziumschichten die Temperaturstabilität solcher Schichten erhöht werden kann, allerdings zeigen solche a-Si Schichten eine signifikante Absorption.

Überraschenderweise hat sich mit dem erfindungsgemäßen System herausgestellt, dass mit einer zweiten, abdeckenden Oxidschicht, insbesondere aluminiumhaltigen Oxidschicht die TCO-Schicht dahingehend stabilisiert werden kann, dass diese außerordentlich temperaturstabil wird. Diese zweite Schicht wirkt mithin als Schutzschicht. Verschiedene Hypothesen erklären diesen Effekt. Zum einen wirkt die Oxidschicht als Barriere gegenüber Oxidation, zum anderen wird vermutet, dass für die dotierten Schichten metallische Elemente aus der abdeckenden Schicht in die erste Schicht (das TCO) eindiffundieren und damit eine Art Nachdotierung bewirken. Durch diese Nachdotierung werden einerseits zusätzliche Ladungsträger in die TCO-Schicht eingebracht und andererseits Defekte an den Korngrenzen ausgeheilt, was im letzteren zu einer geringeren Rekombination der Ladungsträger führt. Dies gilt auch im Falle einer "Cross"-Dotierung, d.h., wenn die Zinkoxidschicht mit Gallium und/oder Molybdän dotiert ist und Aluminium aus der Oxidschicht in diese diffundiert. In diesem Fall könnte eine Abnahme der Konzentration dieser Dotanten durch Aluminium als weiteren Dotanten kompensiert werden.

Die Ausführung der Schutzverglasung mit einer vorzugsweise röntgenamorphen Nitridschicht als zweite Schicht zeichnet sich durch eine nitridische Barriere und insbesondere gegenüber der oxidischen Barriere durch eine verbesserte chemische Beständigkeit aus. Dabei ist die zweite Schicht bevorzugt eine aluminiumhaltige Nitridschicht, besonders bevorzugt eine Silizium-Aluminium-Nitridschicht mit 0 bis 95 Gewichtsprozent Silizium am Gesamtmassenanteil von Aluminium und Silizium, ganz besonders bevorzugt 90 Gewichtsprozent Silizium und 10 Gewichtsprozent Aluminium.

Es zeigt sich, dass das erfindungsgemäße Schichtdesign, den oben beschriebenen Mechanismus der Degradation unterdrückt und keine ansteigende Absorption der freien Ladungsträger und damit keine erhöhte Rekombination dieser Ladungsträger mehr beobachtet wird.

Die erste Schicht weist eine Schichtdicke zwischen 200 und 600 nm auf, besonders bevorzugt zwischen 300 und 500 nm. Damit wird eine hinreichende Reflektivität für Wärmestrahlung, beziehungsweise langwellige Infrarot-Strahlung erreicht. Die abdeckende zweite Schicht kann vergleichsweise dünner sein. Bevorzugt werden Schichtdicken im Bereich von 10 bis 300 nm, weiter bevorzugt von 20 bis 150 nm, besonders bevorzugt zwischen 40 und 100 nm. Es wird vermutet, dass bei der zweiten Oxidschicht oder Nitridschicht eine Selbstpassivierung der Schicht durch das entsprechende metallische beteiligte Element erfolgt, welche die Barrierewirkung verbessert, dies gilt insbesondere für Aluminiumoxidschichten oder aluminiumhaltige Nitridschichten, insbesondere Silizium-Aluminium-Nitridschichten. Die Selbstpassivierung tritt bis in eine Tiefe von etwa 10 nm auf. Deshalb sollte die zweite Schicht vorteilhaft mindestens eine Schichtdicke von 10 nm aufweisen. Außerdem ist die erste Schicht dadurch gekennzeichnet, dass sie eine kristalline kolumnare Struktur aufweist, besonders bevorzugt eine kolumnare kristalline Struktur mit einer Korngrößenverteilung von 10 bis 200 nm, bevorzugt 20 bis 150 nm, besonders bevorzugt von 30 bis 120 nm. Die zweite Schicht weist eine röntgenamorphe Struktur auf.

Zur Vermeidung einer Diffusion von Bestandteilen der Scheibe in die leitfähige Beschichtung oder umgekehrt, beispielsweise einer Diffusion von Alkaliionen, ist in einer vorteilhaften Ausgestaltung der Schutzverglasung als zusätzliche Barrierebeschichtung auf zumindest einer der Seitenflächen der Glas- oder Glaskeramikscheibe vor der leitfähigen Beschichtung bevorzugt eine Zwischenschicht aufgebracht, so dass die Zwischenschicht zwischen der leitfähigen Beschichtung und der Seitenfläche der Scheibe angeordnet ist.

Diese Zwischenschicht ist vorzugsweise eine aluminiumhaltige und/oder siliziumhaltige Schicht, insbesondere mit 0 bis zu 95 Gewichtsprozent Silizium am Gesamtmassenanteil von Aluminium und Silizium, bevorzugt eine Oxidschicht oder besonders bevorzugt eine Nitridschicht, insbesondere eine Silizium-Aluminium-Nitridschicht.

Als Glas- oder Glaskeramikscheibe eignen sich beispielsweise Gläser aus der Familie der Alumo-Silikatgläser oder Kalk-Natron-Gläser. Besonders bei Verwendung von Kalk-Natron-Gläsern (Sodalime) kommt als Zwischenschicht bevorzugt eine Silizium-Aluminium-Nitridschicht mit dem Zusammensetzungsbereich Si₇₀₋₉₅Al₃₀₋₅N in Betracht. Bei Alumo-Silikatgläsern (wie beispielsweise Robax) hat sich der Zusammensetzungsbereich Al₆₀₋₉₀Si₄₀₋₁₀N als besonders geeignet herausgestellt.

Die hohe Temperaturstabilität der erfindungsgemäßen Beschichtung ermöglicht es, nachfolgende Behandlungsschritte bei hoher Temperatur bei der Herstellung der Verglasung nach dem Aufbringen der infrarotreflektierenden Beschichtung durchzuführen. So ist gemäß einer Ausführungsform der Erfindung vorgesehen, eine thermisch oder chemisch vorgespannte Glasscheibe zu verwenden. Ein thermisches Vorspannen kann dabei auch nach der Abscheidung der infrarotreflektierenden Beschichtung erfolgen, ohne, dass die Beschichtung degeneriert.

Im Fall einer Beschichtung als letzten Prozessschritt ohne einen thermischen Vorspannprozess zeigt die nitridische Barriere eine bessere chemische Beständigkeit als die oxidische Barriere.

Außerdem kann in einer besonderen Ausführungsform auch ein Druck von keramischen Farben zusätzlich mit aufgebracht werden, sowohl vor als auch nach der IR-reflektierenden Beschichtung. Die keramischen Farben können dann in einem thermischen Temperprozess mit eingebrannt werden.

Eine hohe Temperaturbeständigkeit wird insbesondere dann erzielt, wenn die erste Schicht kristallin ausgebildet ist. Demgegenüber ist die Schutzwirkung der zweiten Schicht wiederum besonders dann gut, wenn diese röntgenamorph ausgebildet ist. Vorgesehen ist eine Kombination einer kristallinen ersten Schicht und einer röntgenamorphen zweiten Schicht ist besonders.

Um eine thermische Isolierung zu bewirken, können zusätzlich zur infrarotreflektierenden Beschichtung noch weitere Maßnahmen eingesetzt werden. Hierzu zählt insbesondere eine Verglasung mit mehreren Scheiben. Solche Mehrfachscheiben-Systeme sowohl mit als auch ohne IR-reflektierende Beschichtung sind bereits heute am Markt etabliert. Vorteilhaft an dem erfindungsgemäßen System ist es, Scheiben in einem solchen Mehrfachscheiben-System einzusparen, damit die bauliche Tiefe deutlich zu reduzieren bei gleicher bzw. reduzierter Erwärmung der äußersten (dem Betrachter zugewandten) Scheibe. Demgemäß ist in einer Weiterbildung der Erfindung eine Schutzverglasung vorgesehen, die eine zweite transparente Scheibe umfasst, wobei die Glas- oder Glaskeramikscheibe beabstandet zur zweiten transparenten Scheibe angeordnet ist, so dass zwischen der Glas- oder Glaskeramikscheibe und der zweiten transparenten Scheibe ein Zwischenraum gebildet wird.

Ein weiterer Vorteil der Erfindung ist, dass die infrarotreflektierende Beschichtung mit keramischer Dekorfarbe gut verträglich ist. Die keramische Dekorfarbe und die Beschichtung haften fest aneinander. Daher ist gemäß einer Ausführungsform auf der Seitenfläche der Glas- oder Glaskeramikscheibe, auf der auch die infrarotreflektierende Beschichtung angeordnet ist, ein Dekor aus keramischer Dekorfarbe aufgebracht. Insbesondere ist es auch möglich, den Einbrand der Dekorfarbe erst nach dem Aufbringen der infrarotreflektierenden Beschichtung durchzuführen, da die erfindungsgemäße Beschichtung den hohen Temperaturen beim Einbrand ohne wesentliche Degeneration widersteht. Die keramische Dekorfarbe kann in einer besonderen Ausführungsform allerdings auch auf der der Beschichtung abgewandten Seite aufgebracht sein.

Als Substrat für die erfindungsgemäße Beschichtung, beziehungsweise als Glas- oder Glaskeramikscheibe eignen sich insbesondere Gläser aus der Familie der Borosilikatgläser, Alumo-Silikatgläser, Kalk-Natron-Gläser, Glaskeramiken, wie beispielsweise Lithium-Aluminosilikat-Glaskeramik, Bleisilikatgläser, Phosphatgläser oder auch kristalline Gläser wie z.B. Quarzglas oder Saphir.

Die Erfindung wird nachfolgend anhand der Figuren genauer beschrieben.
Fig. 1 zeigt einen Querschnitt durch eine Schutzverglasung mit einer infrarotreflektierenden Beschichtung.
Fig. 2 zeigt eine Variante mit einem Dekor auf der Beschichtung.
Fig. 3 zeigt eine weitere Variante, bei welcher die Beschichtung auf dem Dekor abgeschieden ist.
Fig. 4 zeigt ein thermisches Prozessaggregat mit einer Schutzverglasung.
Fig. 5 ist ein Diagramm der Reflektivität für verschiedene Infrarot-Wellenlängen in Abhängigkeit der Beheizungsdauer.
Fig. 6 zeigt eine elektronenmikroskopische Aufnahme einer Kante einer mit einer infrarotreflektierenden Beschichtung versehenen Glasscheibe.
Fig. 7 zeigt eine elektronenmikroskopische Aufnahme in Aufsicht auf die Beschichtung.
Fig. 8 ist ein Diagramm der spektralen Reflektivität einer Beschichtung im Infrarot-Spektralbereich und der spektralen Strahlungsleistung eines schwarzen Körpers bei einer Temperatur von 500 °C.
Fig. 9 ist ein Diagramm entsprechend zu Fig. 8, wobei die Reflektivität nach einer Temperatur-Dauerbelastung gemessen wurde.
Fig. 10 zeigt eine Variante mit einer Zwischenschicht zwischen der Glas- oder Glaskeramikscheibe und der infrarotreflektierenden Beschichtung.

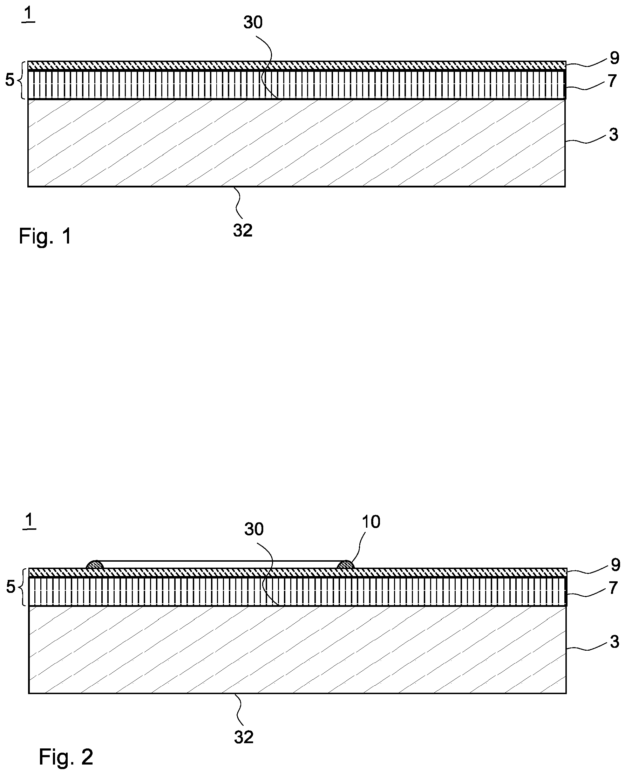

Fig. 1 zeigt eine Grundform einer erfindungsgemäßen Schutzverglasung 1. Die Schutzverglasung 1 umfasst eine im sichtbaren Spektralbereich transparente Glas- oder Glaskeramikscheibe 3 mit zwei gegenüberliegenden Seitenflächen 30, 32. Auf der Seitenfläche 30 ist eine infrarotreflektierende Beschichtung 5 mit einer ersten Schicht 7 und einer die erste Schicht 7 abdeckenden, dementsprechend nach außen weisenden zweiten Schicht 9 abgeschieden. Als erste Schicht 7 dient ein transparentes leitfähiges Oxid, dessen Leitfähigkeit durch eine Dotierung erhöht ist, besonders bevorzugt Zinkoxid. Als Dotand werden Metalle verwendet, bevorzugt Gallium oder Molybdän, besonders bevorzugt aber Aluminium verwendet.

Ohne Beschränkung auf spezielle Ausführungsbeispiele liegt der Gehalt des Dotanden in der TCO-Schicht zur Herstellung einer hinreichenden Reflektivität 20 im infraroten Spektralbereich bevorzugt zwischen 0,2 % und 10 %, bevorzugt zwischen 0,5 % und 6 %, besonders bevorzugt zwischen 0,5 % und 3 %. Für Aluminium werden dabei Gehalte ab 1% bevorzugt, besonders bevorzugt Gehalte zwischen 1 % und 2 %. Für Gallium und Molybdän werden dabei Gehalte ab 1,5 % bevorzugt, besonders bevorzugt Gehalte zwischen 2 % und 6 %. Jedenfalls wird die Menge des Dotanden gemäß einer weiteren Ausführungsform der Erfindung so gewählt, dass der Flächenwiderstand der ersten Schicht zwischen 5 Ω und 50 Ω liegt, bevorzugt zwischen 10 und 20 Ω, besonders bevorzugt höchstens 17 Ω/sqr beträgt. Damit wird eine gute Transparenz im sichtbaren Spektralbereich bei gleichzeitig hoher Infrarot-Reflektivität 20 erreicht.

Die zweite Schicht 9 des Beschichtungsverbunds kann eine Oxidschicht sein, besonders bevorzugt eine Aluminiumoxidschicht. Die Oxidschicht muss nicht notwendigerweise rein sein, d.h. ausschließlich aus Sauerstoff und dem entsprechend Metall oder Halbmetall bestehen. Denkbar ist auch eine Mischoxidschicht, die neben dem Oxid in geringerem Maße auch ein oder mehrere andere Oxide enthält. Gedacht ist insbesondere auch an silikatische Bestandteile oder eine siliziumhaltige Oxidschicht. Besonders bevorzugt sind hier Aluminiumsilikatschichten oder siliziumhaltige Oxidschichten. Es hat sich überraschend gezeigt, dass eine aluminiumhaltige Schicht eine sehr gute Passivierungswirkung aufweist. Das zeigt sich dergestalt, dass die vorhandene Leitfähigkeit der TCO-Schicht ohne zweite Schicht nach einer kurzen Temperaturbehandlung signifikant steigt. Zusätzlich zur Passivierwirkung hat die zweite Schicht auch die Funktion einer Oxidationsschutzschicht. Ohne eine solche Schicht kann die TCO-Schicht, beziehungsweise die erste Schicht bei hohen Temperaturen weiter oxidieren, was insbesondere sehr schnell bei der Anwesenheit von Feuchtigkeit und einer dann stattfindenden Hydrolyse der Fall ist. Diese Oxidation führt zu einer schnellen Abnahme der Leitfähigkeit und damit auch der Reflektivität 20 für Infrarotlicht, da durch die Oxidation weitere Defektzentren generiert werden, an welchen die für die Leitfähigkeit verantwortlichen freien Ladungsträger rekombinieren können. Eine Passivierung ist insbesondere bei der bevorzugten Schichtdicke der zweiten Schicht im Bereich von 20 bis 150 nm keineswegs selbstverständlich, sondern tatsächlich auf die Anwesenheit von metallischen Anteilen des Reaktionspartners der Oxidschicht, besonders bevorzugt im Falle von Aluminiumoxid auf metallisches Aluminium zurückzuführen. So ist es beispielsweise aus der Halbleiter-Industrie bekannt, SiO₂ als Passivierungsschicht zu verwenden. Es hat sich aber gezeigt, dass eine SiO₂-Schicht als zweite Schicht keine dauerhafte Passivierung bewirkt, sondern eine derart abgedeckte TCO-Schicht ebenso wie eine nicht abgedeckte TCO-Schicht schnell degradiert.

Alternativ ist die zweite Schicht 9 der infrarotreflektierende Beschichtung 5 eine röntgenamorphe Nitridschicht, bevorzugt eine aluminiumhaltige Nitridschicht, besonders bevorzugt eine Silizium-Aluminium-Nitridschicht.

Für die optischen Eigenschaften der Beschichtung 5 ist es weiterhin allgemein günstig, wenn der Brechungsindex der zweiten Schicht 9 kleiner ist als der Brechungsindex der ersten Schicht 7. Durch den Brechungsindex-Unterschied mit einer oberen, niedrigbrechenden Lage kann zusätzlich eine Entspiegelungswirkung erzielt werden. Es wird ein Unterschied der Brechungsindizes von erster und zweiter Schicht von mindestens 0,1 bevorzugt, besonders bevorzugt ein Unterschied von mindestens 0,13. In einer bevorzugten Ausführungsform weist Aluminiumoxid einem Brechungsindex von etwa 1,7 als zweite Schicht 9 auf und die TCO-Schicht, besonders bevorzugt Zinkoxid der ersten Schicht 7, einen Brechungsindex von etwa 1,9.

Im Falle einer Nitridschicht als zweiter Schicht kann der Brechungsindex der zweiten Schicht allerdings auch höher sein, als der Brechungsindex der ersten Schicht.

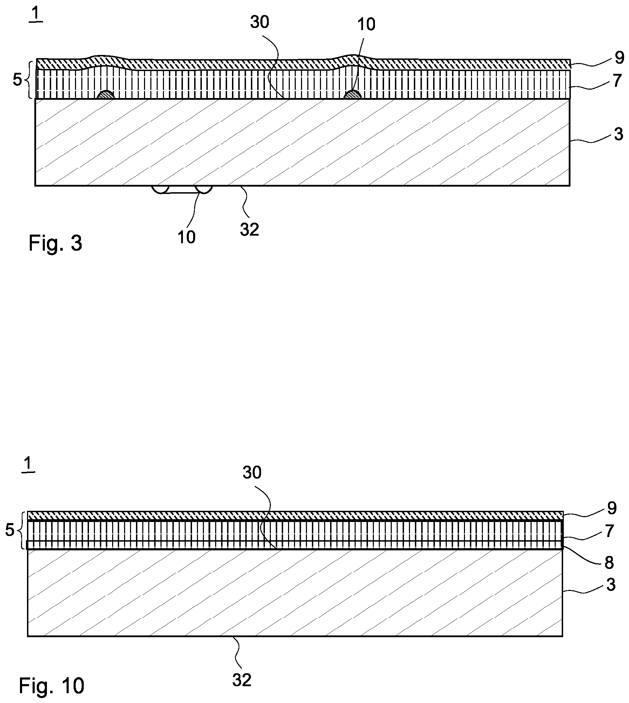

In Fig. 10 ist eine bevorzugte Weiterbildung der in Fig. 1 dargestellten Grundform der Erfindung gezeigt. Dabei ist zumindest auf der Seitenfläche 30 der Glas- oder Glaskeramikscheibe 3 eine Zwischenschicht 8 aufgebracht als zusätzliche Barrierebeschichtung zu der daraufliegenden infrarotreflektierende Beschichtung 5 mit der ersten Schicht 7 und der die erste Schicht 7 abdeckenden, dementsprechend nach außen weisenden zweiten Schicht 9.

Die Zwischenschicht 8 ist bevorzugt eine aluminiumhaltige und/oder siliziumhaltige Schicht, weiter bevorzugt eine Oxidschicht oder besonders bevorzugt eine Nitridschicht, insbesondere eine Silizium-Aluminium-Nitridschicht. Die Zwischenschicht 8 fungiert bevorzugt als Diffusionsbarriere zwischen dem Glas 3 und der ersten Schicht 7 aus einem transparenten leitfähigen Oxid (kurz: TCO), bevorzugt einem dotierten TCO, besonders bevorzugt einem dotierten Zinkoxid. Gerade im Fall einer Beschichtung als letzten Prozessschritt ohne einen thermischen Vorspannprozess zeigt die nitridische Barriere eine bessere chemische Beständigkeit als die oxidische Barriere.

Fig. 2 zeigt eine Weiterbildung der in Fig. 1 dargestellten Grundform. Bei dieser Weiterbildung ist auf der zweiten Schicht 9 der Beschichtung 5 keramische Dekorfarbe 10 aufgebracht und eingebrannt. Die strukturiert aufgetragene Dekorfarbe 10 kann beispielsweise dekorative Rahmenausführungen, Ornamente, Logos oder andere Kennzeichnungen, wie etwa Begrenzungen von funktionellen Feldern darstellen oder hervorheben.

Hier bietet die Erfindung den Vorteil, dass die keramische Dekorfarbe 10 sehr gut auf der zweiten Schicht 9 haftet. Die Dekorfarbe 10 wird üblicherweise in Form einer Paste aufgebracht, getrocknet und anschließend eingebrannt, wobei die Farbe zu einem keramischen oder keramikartigen Gefüge zusammensintert. Dabei kann die keramische Farbe gegebenenfalls einen Verbund durch die Schicht hindurch mit den ersten 100 nm des darunterliegenden Glases oder Glaskeramiksubstrats ausbilden und weist damit eine hohe mechanische Beständigkeit auf.

Gemäß einer Ausführungsform des Verfahrens zur Herstellung einer erfindungsgemäßen Schutzverglasung 1 ist demgemäß vorgesehen, dass nach dem Abscheiden der Beschichtung 5, also nach dem Aufbringen sowohl der ersten Schicht 7, als auch der zweiten Schicht 9 keramische Dekorfarbe 10 aufgetragen, getrocknet und eingebrannt wird. Die Beschichtung 5 widersteht dabei auch ohne wesentliche Degeneration die Einbrandtemperaturen von zumindest zeitweise 550 °C bis 700 °C. Das Trocknen kann auch Teil des Einbrand-Schrittes sein. Gemäß einem Ausführungsbeispiel wird die Dekorfarbe 10 bei 120 °C bis 180 °C für 3 min getrocknet. Der anschließende Einbrand erfolgt dann bei einer Temperatur von größer 700 °C, in einer besonderen Ausführungsform von 730 °C bis 740 °C für eine Dauer von 2 - 7 min. Dieser Einbrandschritt kann mit einem thermischen Tempern bzw. Vorspannschritt kombiniert werden. Allgemein, ohne Beschränkung auf die Ausführungsbeispiele oder die Darstellung der Fig. 2 wird eine keramische Dekorfarbe 10 in einer pastösen Zubereitung, welche ein oder mehrere anorganische Pigmente und Glasfritte enthält, verwendet. Die Glasfritte dient in der eingebrannten Dekorfarbe 10 als Matrix für die Pigmentpartikel, zusätzlich enthält die pastöse Vorstufe auch organische Bestandteile.

Gemäß einer weiteren Variante, die in Fig. 3 gezeigt ist, kann die keramische Dekorfarbe 10 auch vor dem Abscheiden der Beschichtung 5 aufgebracht werden, wobei die Beschichtung 5 auf der mit der Dekorfarbe 10 versehenen Seitenfläche 30 des Glas- oder Glaskeramiksubstrats abgeschieden wird, so dass die Beschichtung 5 die keramische Dekorfarbe 10 überdeckt. Vorzugsweise wird die Dekorfarbe 10 vor dem Abscheiden der Schicht 5 eingebrannt, möglich ist aber auch hier, den Einbrand erst nach dem Abscheiden vorzunehmen.

Schließlich ist es als weitere Variante möglich, wie ebenfalls in Fig. 3 dargestellt, die keramische Dekorfarbe 10 auf einer Seitenfläche 32 aufzubringen, welche einer beschichteten Seitenfläche 30 gegenüberliegt. Diese Ausführungsform kann auch mit der in Fig. 2 gezeigten Ausführungsform kombiniert werden, so dass beide Seitenflächen dekoriert sind und das Dekor auf einer Seitenfläche 30 auf der Beschichtung 5 aufgebracht ist. Wie oben beschrieben kann auch hier das Dekor vor oder nach der Abscheidung der Beschichtung eingebrannt werden.

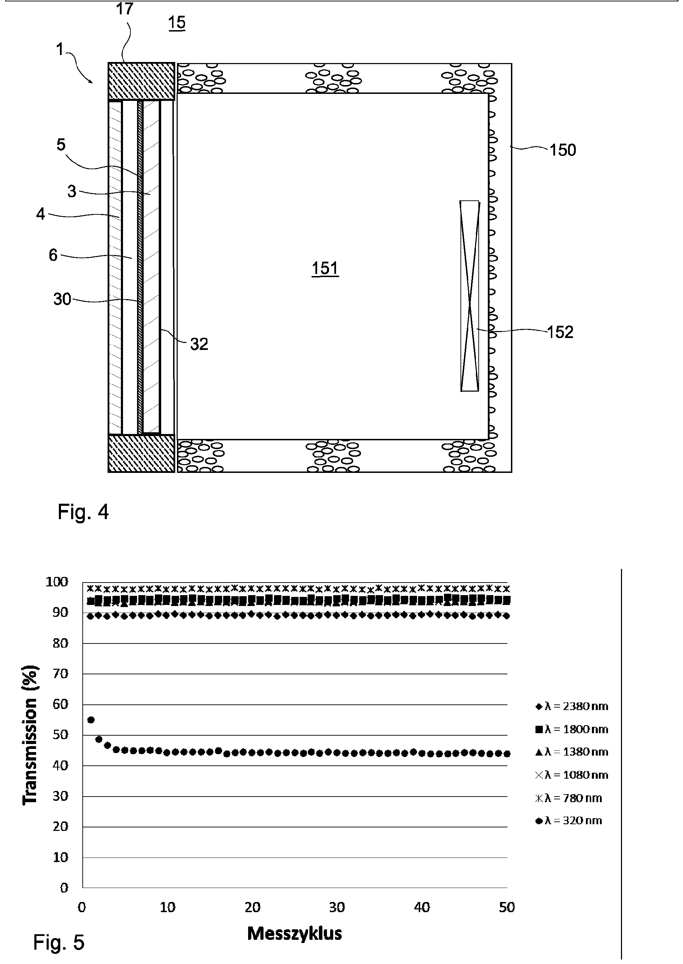

In Fig. 4 ist eine bevorzugte Anwendung der Erfindung dargestellt. Besonders geeignet ist eine erfindungsgemäße Schutzverglasung 1 für ein thermisches Prozessaggregat 15. Bei diesem Prozessaggregat 15 kann es sich um ein Haushaltsgerät, wie etwa einen Backofen handeln. Das thermische Prozessaggregat 15 umfasst eine Wandung, insbesondere eine Backofenmuffel 150, die einen Ofenraum 151 umgibt. Der Ofenraum 151 wird durch ein oder mehrere Heizelemente 152 beheizt.

Die Schutzverglasung 1 bildet eine Tür 17 des thermischen Prozessaggregats 15. Anders als bei den vorangegangenen grundlegenden Beispielen der Fig. 1 bis Fig. 3 umfasst die Schutzverglasung 1 hier eine weitere transparente Glas- oder Glaskeramikscheibe 4. Die beiden Scheiben 3, 4 sind vorzugsweise durch einen Zwischenraum 6 voneinander getrennt. Dementsprechend ist gemäß einer Ausführungsform der Erfindung allgemein vorgesehen, dass die Schutzverglasung 1 eine Mehrfachverglasung mit mindestens zwei zueinander beabstandeten Scheiben 3, 4 umfasst.

Dabei ist die dargestellte Anordnung sinnvoll, bei welcher die dem Ofenraum zugewandte Glas- oder Glaskeramikscheibe 3 die erfindungsgemäße Beschichtung 5 aufweist. Damit wird Aufheizung der benutzerseitigen zweiten Scheibe 4 verringert. Besonders vorteilhaft ist weiterhin ein weiteres Merkmal. Wie bereits oben beschrieben, ist eine bevorzugte Anwendung ein Backofen mit Pyrolyse-Reinigungsfunktion, für welche eine Aufheizung der Backofenmuffel auf über 450 °C charakteristisch ist. Die Beschichtung 5 ist dann vorzugsweise auf der dem Ofenraum 151 abgewandten Seitenfläche 30 angeordnet. Damit kann sich die dem Ofenraum 151 zugewandte Glas- oder Glaskeramikscheibe 3 trotz der Beschichtung stark aufheizen, so dass eine Abreinigung der Verschmutzung an der Scheibe durch Pyrolyse stattfinden kann. In einer weiteren Ausführungsform befindet sich die Beschichtung auf der dem Ofenraum zugewandten Seite. In diesem Fall wird die Wärmestrahlung in den Ofenraum ohne Verlust, d.h. ohne dass diese durch die Scheibe hindurchgeht, zurückreflektiert, was dazu führt, dass der Pyrolyseeffekt noch weiter verstärkt wird.

Eine weitere bevorzugte Anwendung einer erfindungsgemäßen Verglasung ist eine Verglasung eines Kaminofens.

Die besonders hohe Temperaturbeständigkeit einer erfindungsgemäßen Beschichtung 5 wird anhand von Fig. 5 verdeutlicht. Fig. 5 zeigt Messwerte der Lichttransmission für sechs verschiedene Wellenlängen im infraroten, sichtbaren und ultravioletten Spektralbereich, nämlich 2380 nm, 1800 nm,1380 nm, 1080 nm, 780 nm und 320 nm. Die Transmission wurde fortlaufend während einer Erhitzung einer Probe in Form einer erfindungsgemäß beschichteten Glasscheibe gemessen. Dazu wurde die Probe in einem Heißofen mit einer Temperatur T = 740 °C behandelt. Das Handling bis zum ersten Messzyklus beträgt ca. 30 s. Ein Messzyklus dauert ca. 65 s.

Es zeigt sich, dass für Wellenlängen A größer als 320 nm keine Änderung der Transmission mit der Zeit erfolgt. Lediglich bei einer Wellenlänge von 320 nm, also im ultravioletten Spektralbereich, nimmt die Transmission kurz ab und wird ab dem fünften Messzyklus wieder konstant. Dies ist nicht auf eine Degradation der Beschichtung zurückzuführen, sondern basiert auf dem physikalischen Effekt, dass die Transmission im UV-Bereich temperaturabhängig ist. Als Fazit ergibt sich, dass keine Änderung der Transmission beobachtet wird, die durch irgendwelche Reaktionen innerhalb des Schichtsystems hervorgerufen wird. Das Schichtsystem aus einer dotierten leitfähigen ersten Schicht (TCO-Schicht) und einer abdeckenden zweiten Schicht in Form einer Oxidschicht ist mithin sehr langzeitstabil. Wie ebenfalls anhand von Fig. 5 belegt wird, weist das Schichtsystem im sichtbaren Spektralbereich eine Transmission von zumindest 75 % auf. In Fig. 5 ist ein Schichtsystem getestet worden, bestehend aus einer dotierten Zinkoxidschicht und einer aluminiumhaltigen Oxidschicht.

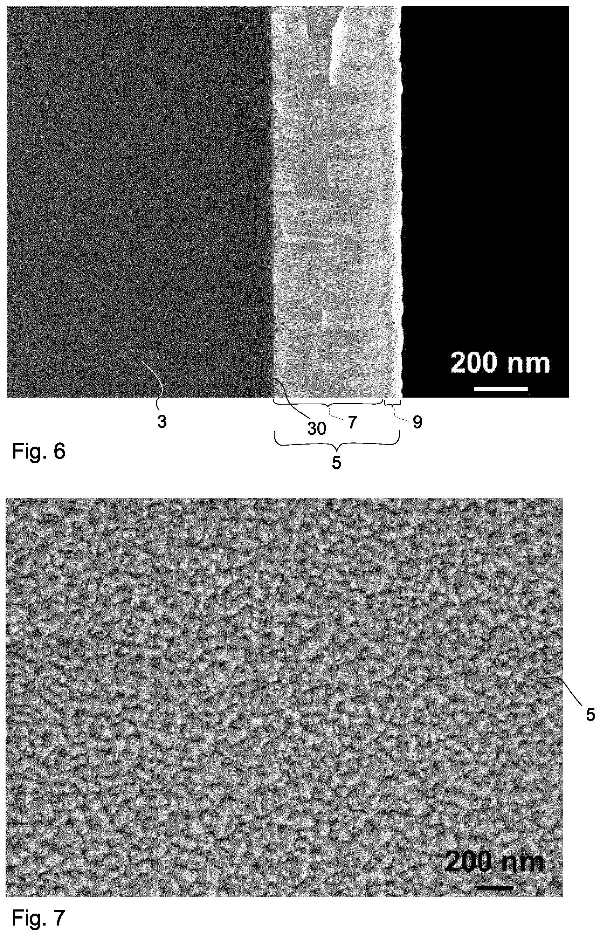

In Fig. 6 ist eine elektronenmikroskopische Aufnahme der Bruchkante einer Glasscheibe 3 gezeigt, die mit einer infrarotreflektierenden Beschichtung 5 gemäß der Erfindung beschichtet wurde. Die erste Schicht 7 und die zweite Schicht 9 der Beschichtung 5 sind in der Aufnahme gut voneinander unterscheidbar. Die erste Schicht 7, hier eine dotierte Zinkoxidschicht weist ein kristallines Gefüge auf. Die Bruchstrukturen an der Kante verlaufen überwiegend senkrecht zur Seitenfläche 30, beziehungsweise weisen in Richtung der Oberflächennormale. Dies deutet auf eine kolumnare kristalline Struktur hin. Gemäß einer Ausführungsform der Erfindung ist ohne Beschränkung auf das spezielle, dargestellte Beispiel eine erste Schicht 7 mit kolumnarer Struktur vorgesehen, wobei die Längsrichtung der Säulen im Wesentlichen senkrecht zur Oberfläche der Glas- oder Glaskeramikscheibe 3 liegt. Die zweite Schicht 9, in diesem Fall eine aluminiumhaltige Oxidschicht, weist keine erkennbaren Strukturen auf. Tatsächlich erweist sich die zweite Schicht als röntgenamorph oder zumindest überwiegend röntgenamorph. Das amorphe Gefüge der Aluminiumoxidschicht ist offenbar günstig, um eine gute Passivierung zu bewirken und bedeckt die kristalline Struktur der ersten Schicht homogen. Aufgrund der strukturlosen Morphologie der Passivierungsschicht erfolgt eine gute Anlagerung und Anpassung an die durch die TCO Beschichtung vorgegebene Struktur. Anhand des in Fig. 6 gezeigten Maßstabs ist ersichtlich, dass in dieser Ausführungsform die erste Schicht 7 eine Schichtdicke von etwa 350-450 nm aufweist. Die Schichtdicke der Aluminiumoxidschicht ist deutlich geringer und beträgt etwa 50-80 nm. Die Gesamt-Schichtdicke der Beschichtung 5 liegt damit im bevorzugten Bereich zwischen 400 und 530 nm.

Fig. 7 zeigt in ähnlichem Maßstab eine elektronenmikroskopische Aufnahme in Aufsicht auf die Beschichtung 5. Die Säulen der kolumnaren Struktur der ersten Schicht 7 erstrecken sich über die gesamte Schichtdicke und weisen in der Draufsicht eine breite Korngrößenverteilung zwischen 10 und 100 nm auf. Es ist auch gut erkennbar, dass die röntgenamorphe zweite Schicht 9 lediglich zu einer Bedeckung der Kristallstruktur führt und damit keine strukturelle Veränderung einhergeht.

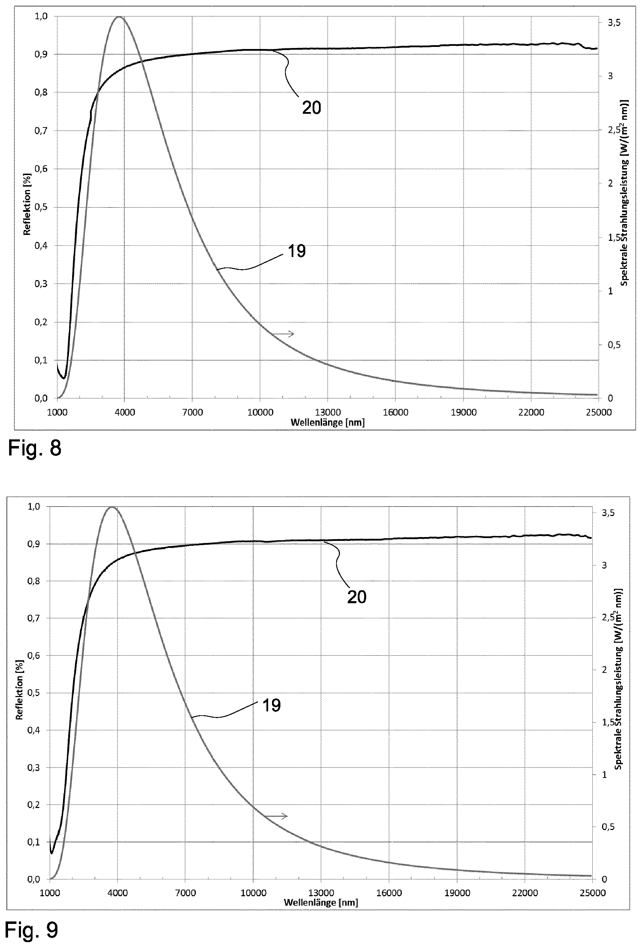

Anhand von Fig. 5 wurde die hohe Transmission im sichtbaren Spektralbereich gezeigt. Die Beschichtung 5 soll aber nun entsprechend ihrer Funktion eine hohe Reflektivität 20 für den für die Wärmestrahlung maßgeblichen Infrarotbereich aufweisen. Diese Eigenschaft wird nachfolgend anhand der Fig. 8 und Fig. 9 gezeigt.

Fig. 8 zeigt die spektrale Reflektivität 20 der Beschichtung 5 in einem Spektralbereich von 1 µm bis 25 µm im Zustand direkt nach dem Abscheiden der Schichten 7, 9. Ebenfalls dargestellt ist die spektrale Strahlungsleistung 19 eines schwarzen Körpers mit einer Temperatur von 500 °C nach der Planckschen Strahlungsformel. Für diese Kurve gelten die auf der rechten Ordinate des Diagramms eingetragenen Funktionswerte. Diese Kurve repräsentiert in etwa das Wärmestrahlungs-Spektrum, welches ein Heißraum eines thermischen Prozessaggregats, also beispielsweise der Ofenraum 151 des Beispiels der Fig. 4 bei entsprechenden Betriebstemperaturen abgibt.

Im mittleren Infrarotbereich (2,5-25 µm), also dort, wo eine Strahlungsleistung 19 bei einer Ofentemperatur von 500 °C maximal ist, wird eine Reflektivität 20 von zumindest 80 % erreicht.

Das Schichtsystem ist bis zu einer Temperatur von mindestens 740 °C belastbar ohne erkennbare Degradation in der Reflektivität 20. Für eine typische Einsatz-Temperatur von 500 °C konnte eine Dauerbelastung über 1000 h ebenfalls ohne Degradation der IR-Reflektivität gezeigt werden. Fig. 9 zeigt dazu die Reflektivität 20 der Beschichtung 5 nach dieser Dauerbelastung. Nach den thermischen Belastungstests zeigt die Beschichtung 5 außerdem keine optisch auffälligen Farbveränderungen. Die Farbwerte bewegen sich gemäß einer Ausführungsform der Erfindung sowohl vor, als auch nach der thermischen Dauerbelastung im farbneutralen Bereich. Im sog. L-a-b Farbsystem ist dieser Bereich durch Werte a, b jeweils im Bereich von -5 bis 5, vorzugsweise -2 bis +2 und die Farbveränderung durch einen Abstand der Farbwerte ΔE ≤ 3 gekennzeichnet. Vorzugsweise bleibt wenigstens einer der beiden Werte a, b im Bereich von - 5 bis 5. Der andere Farbwert kann gegebenenfalls auch einen größeren oder kleineren Wert aufweisen.

Zur Optimierung der Beschichtung 5, insbesondere zur Reduktion des Flächenwiderstands und damit zur Erhöhung der Reflexion im IR-Bereich, wird vorzugsweise eine Nachbehandlung durchgeführt, wie eine thermische Nachbehandlung durch Ofenlagerung, Blitzlampentemperung über eine Xenonlampe, insbesondere eine oberflächennahe Behandlung nur der Beschichtung 5, mit kurzwelliger Infrarotstrahlung oder eine Laserbehandlung.

Im Gegensatz zu bekannten infrarotreflektierenden Schichten verringert sich überraschenderweise durch die thermische Behandlung der Flächenwiderstand der dotierten ersten Schicht 7, also der TCO-Schicht sogar noch, wodurch in bemerkenswerter Weise eine Zunahme der Reflektivität 20 im IR-Bereich resultiert. Die Beschichtung degradiert also nicht, sondern zeigt im Gegenteil sogar verbesserte Eigenschaften. Generell ist es überraschend, dass die Passivierung mit der zweiten Schicht 9 so langzeitstabil ist. Dies auch, da die Temperaturausdehnungskoeffizienten der Schichten 7, 9 sehr unterschiedlich sind. Im Falle der aluminiumhaltigen Oxidschicht als zweite Schicht 9 weist diese einen linearen Ausdehnungskoeffizienten von 8,1•10⁻⁶ K⁻¹ auf, wohingegen der lineare Ausdehnungskoeffizient der ersten Schicht 7, in diesem Fall dotiertes Zinkoxid, bei etwa 3•10⁻⁶ K⁻¹ liegt. Trotz dieser Unterschiede kommt es nicht zu Rissen in den Schichten 7, 9, welche eine Degradation begünstigen würden. Günstig ist hierbei, dass die abdeckende Oxidschicht einen höheren Ausdehnungskoeffizienten als die erste Schicht 7 aufweist. Gemäß einer Ausführungsform der Erfindung ist daher allgemein vorgesehen, dass die zweite Schicht 9 einen höheren linearen thermischen Ausdehnungskoeffizienten als die erste Schicht 7 aufweist.

Es ist dem Fachmann ersichtlich, dass die Erfindung nicht auf die anhand der Figuren geschilderten Ausführungsbeispiele beschränkt ist, sondern in vielfältiger Weise im Rahmen der Patentansprüche variiert werden kann. Insbesondere können auch verschiedene Ausführungsbeispiele miteinander kombiniert werden. So zeigen die Ausführungsbeispiele der Figuren 1 bis 4 und 10 nur jeweils eine einseitige Beschichtung 5. Gegebenenfalls kann aber auch eine beidseitige Beschichtung 5 sinnvoll sein. Bei einer Mehrfach-Verglasung, wie sie das Beispiel der Fig. 4 zeigt, ist es auch denkbar, auf zwei Scheiben jeweils eine erfindungsgemäße Beschichtung 5 vorzusehen.

**Bezugszeichenliste:**

| | |
|---|---|
| Schutzverglasung | 1 |
| Scheibe | 3, 4 |
| Beschichtung | 5 |
| Zwischenraum | 6 |
| erste Schicht | 7 |
| Zwischenschicht | 8 |
| zweite Schicht | 9 |
| keramischeDekorfarbe | 10 |
| Thermisches Prozessaggregat | 15 |
| Tür 17 | |
| Spektrale Strahlungsleistung | 19 |
| Reflektivität | 20 |
| Seitenflächen von | 3 30, 32 |
| Backofenmuffel | 150 |
| Ofenraum | 151 |
| Heizelement | 152 |

## Patentansprüche

1. Schutzverglasung (1), umfassend
- eine im sichtbaren Spektralbereich transparente Glas- oder Glaskeramikscheibe (3) mit zwei gegenüberliegenden Seitenflächen (30, 32),
sowie
- auf zumindest einer der Seitenflächen (30, 32) eine Beschichtung (5), welche Infrarot-Strahlung reflektiert, wobei die Beschichtung (5) eine erste Schicht (7) auf der Seitenfläche (30, 32) und eine zweite Schicht (9) umfasst, welche auf der ersten Schicht (7) aufgebracht ist, und wobei die erste Schicht (7) aus einem dotierten transparenten leitfähigen Oxid und die zweite Schicht (9) aus einer röntgenamorphen Oxid- oder Nitridschicht besteht, **dadurch gekennzeichnet, dass** die erste Schicht (7) eine Schichtdicke im Bereich von 200 bis 600 Nanometer aufweist, kristallin ist und eine kolumnare Struktur aufweist, wobei die Längsrichtung der Säulen im Wesentlichen senkrecht zur Oberfläche der Glas- oder Glaskeramikscheibe (3) liegt.

2. Schutzverglasung (1) gemäß Anspruch 1, **dadurch gekennzeichnet, dass** die erste Schicht (7) eine dotierte leitfähige Zinkoxidschicht ist und die zweite Schicht eine aluminiumhaltige Oxidschicht oder eine aluminiumhaltige Nitridschicht.

3. Schutzverglasung (1) gemäß einem der vorstehenden Ansprüche, **dadurch gekennzeichnet, dass** auf zumindest einer der Seitenflächen (30, 32) der Glas- oder Glaskeramikscheibe (3) vor der Beschichtung (5) eine Zwischenschicht (8) als zusätzliche Barrierebeschichtung aufgebracht ist.

4. Schutzverglasung (1) gemäß dem vorstehenden Anspruch, **dadurch gekennzeichnet, dass** die Zwischenschicht (8) eine aluminiumhaltige und/oder siliziumhaltige Schicht ist, bevorzugt eine Oxidschicht oder besonders bevorzugt eine Nitridschicht, insbesondere eine Silizium-Aluminium-Nitridschicht.

5. Schutzverglasung (1) gemäß einem der vorstehenden Ansprüche, **gekennzeichnet durch** zumindest eines der Merkmale:
- die erste Schicht (7) ist eine mit Aluminium, Gallium oder Molybdän dotierte Zinkoxidschicht,
- der Gehalt des Dotanden in der ersten Schicht (7) liegt zwischen 0,5 % und 6 %,
- der Flächenwiderstand der ersten Schicht (7) beträgt zwischen 10 und 20 Ω, bevorzugt höchstens 17 Ω,
- die zweite Schicht (9) weist eine Schichtdicke im Bereich von 10 bis 300 Nanometer aufweist, bevorzugt 20 bis 150 Nanometer auf,
- die zweite Schicht (9) ist eine Aluminiumoxid-Schicht oder eine Aluminiumsilikatschicht oder eine Silizium-Aluminium-Nitridschicht.

6. Schutzverglasung (1) gemäß einem der vorstehenden Ansprüche, **dadurch gekennzeichnet, dass** die Scheibe (3) eine thermisch oder chemisch vorgespannte Glasscheibe umfasst.

7. Schutzverglasung (1) gemäß einem der vorstehenden Ansprüche, **dadurch gekennzeichnet, dass** die Schutzverglasung (1) eine zweite transparente Scheibe (4) umfasst, wobei die Glas- oder Glaskeramikscheibe (3) beabstandet zur zweiten transparenten Scheibe (4) angeordnet ist, so dass zwischen der Glas- oder Glaskeramikscheibe (3) und der zweiten transparenten Scheibe (4) ein Zwischenraum (6) gebildet wird.

8. Schutzverglasung (1) nach einem der vorstehenden Ansprüche, **dadurch gekennzeichnet, dass** auf der Seitenfläche (30, 32), auf der auch die infrarotreflektierende Beschichtung (5) angeordnet ist, ein Dekor aus keramischer Dekorfarbe (10) aufgebracht ist.

9. Schutzverglasung (1) gemäß einem der vorstehenden Ansprüche, **dadurch gekennzeichnet, dass** die Farbe der Beschichtung (5) im farbneutralen Bereich liegt, bei welchem im L-a-b Farbsystem mindestens einer der Werte a, b im Bereich von - 5 bis + 5 liegt und die Farbveränderung durch ΔE ≤ 3 gekennzeichnet ist.

10. Thermisches Prozessaggregat (15), umfassend eine thermische Schutzverglasung (1) nach einem der vorstehenden Ansprüche.

11. Thermisches Prozessaggregat (15) gemäß dem vorstehenden Anspruch in Form
- eines Kaminofens oder
- eines Backofens, insbesondere mit Pyrolyse-Reinigungsfunktion durch Aufheizung der Backofenmuffel auf über 450 °C, wobei der Backofen eine Tür (17) mit einer thermischen Schutzverglasung (1) nach einem der Ansprüche 1 bis 9 umfasst.

12. Thermisches Prozessaggregat (15) gemäß einem der zwei vorstehenden Ansprüche, wobei das Prozessaggregat einen Ofenraum (151) aufweist und wobei die thermische Schutzverglasung (1) mindestens eine zweite transparente Scheibe (4) umfasst, wobei die Glas- oder Glaskeramikscheibe (3) beabstandet zur zweiten transparenten Scheibe (4) angeordnet ist und wobei die dem Ofenraum (151) zugewandte Glas- oder Glaskeramikscheibe (3) eine Beschichtung (5), welche Infrarot-Strahlung reflektiert, aufweist.

13. Verfahren zur Herstellung einer Schutzverglasung (1) nach einem der Ansprüche 1 bis 9, bei welchem eine Glas- oder Glaskeramikscheibe (3) mit zwei gegenüberliegenden Seitenflächen (30, 32) bereitgestellt und auf zumindest einer der Seitenflächen (30, 32) eine infrarotreflektierende Beschichtung (5) aufgebracht wird, indem eine erste Schicht (7) durch Vakuumbeschichtung, insbesondere Sputtern, und auf der ersten Schicht (7) eine zweite Schicht (9) durch Vakuumbeschichtung, insbesondere Sputtern, abgeschieden werden, wobei als erste Schicht (7) eine transparente, durch Dotierung leitfähige kristalline Oxidschicht mit einer Schichtdicke im Bereich von 200 bis 600 Nanometer und einer kolumnaren Struktur, bei welcher die Längsrichtung der Säulen im Wesentlichen senkrecht zur Oberfläche der Glas- oder Glaskeramikscheibe (3) liegt, und als zweite Schicht (9) eine amorphe Oxid- oder Nitridschicht aufgebracht werden.

14. Verfahren zur Herstellung einer Schutzverglasung (1) nach Anspruch 13, bei welchem eine Nachbehandlung durch Ofenlagerung, Blitzlampentemperung über eine Xenonlampe, mit kurzweiliger Infrarotstrahlung oder eine Laserbehandlung durchgeführt wird.

15. Verwendung einer Schutzverglasung (1) gemäß einem der Ansprüche 1 bis 9 als Brandschutzverglasung.

## Claims

1. A protective glazing (1), comprising
- a glass or glass ceramic sheet (3) having two opposite faces (30, 32) and being transparent in the visible spectral range; and
- an infrared radiation reflecting coating (5) on at least one of said faces (30, 32), the coating (5) comprising a first layer (7) on the face (30, 32) and a second layer (9) deposited on the first layer (7); and wherein the first layer (7) is made of a doped transparent conductive oxide, and the second layer is made of an X-ray amorphous oxide layer or nitride layer;
**characterised in that** the first layer (7) has a thickness in a range from 200 to 600 nanometres, is crystalline and has a columnar structure, with a longitudinal extension of the columns substantially perpendicular to the surface of the glass or glass ceramic sheet (3).

2. The protective glazing (1) according to claim 1, **characterised in that** the first layer (7) is a doped conductive zinc oxide layer and the second layer is an aluminium-containing oxide layer or an aluminium-containing nitride layer.

3. The protective glazing (1) according to any one of the preceding claims, **characterised in that** an intermediate layer (8) is applied as an additional barrier coating on at least one of the faces (30, 32) of the glass or glass ceramic sheet (3) before said coating (5).

4. The protective glazing (1) according to any one of the preceding claim, **characterised in that** the intermediate layer (8) is an aluminium-containing and/or silicon-containing layer, preferably an oxide layer or particularly preferably a nitride layer, in particular a silicon aluminium nitride layer.

5. The protective glazing (1) according to any one of the preceding claims, **characterised by** at least one of the following features:
- the first layer (7) is a zinc oxide layer doped with aluminium, gallium or molybdenum;
- the first layer (7) has a dopant content between 0.5 % and 6 %;
- the first layer (7) has a sheet resistance between 10 and 20 Ω, preferably not more than 17 Ω;
- the second layer (9) has a thickness in a range from 10 to 300 nanometres, preferably 20 to 150 nanometres;
- the second layer (9) is an aluminium oxide layer or an aluminium silicate layer or a silicon aluminium nitride layer.

6. The protective glazing (1) according to any one of the preceding claims, **characterised in that** the sheet (3) is a thermally or chemically toughened glass sheet.

7. The protective glazing (1) according to any one of the preceding claims, **characterised in that** the protective glazing (1) comprises a second transparent sheet (4), wherein the glass or glass ceramic sheet (3) is arranged spaced apart from the second transparent sheet (4) such that an intermediate space (6) is defined between the glass or glass ceramic sheet (3) and the second transparent sheet (4).

8. The protective glazing (1) according to any one of the preceding claims, **characterised in that** a decorative pattern of decorative ceramic ink (10) is applied on the same face (30, 32) on which the infrared reflecting coating (5) is disposed.

9. The protective glazing (1) according to any one of the preceding claims, **characterised in that** the coating (5) has a colour in a colour-neutral range, with at least one of the values a, b of the Lab colour system in a range between -5 and + 5, and with a colour variation **characterised by** ΔE ≤ 3.

10. A thermal processing unit (15), comprising a thermal protective glazing (1) according to any one of the preceding claims.

11. The thermal processing unit (15) according to the preceding claim, in the form of
- a fireplace oven; or
- a cooking oven, in particular with a pyrolysis cleaning function involving heating of the oven muffle to more than 450 °C, wherein the cooking oven comprises a door (17) with a thermal protective glazing (1) according to any one of claims 1 to 9.

12. The thermal processing unit (15) according to any one of the two preceding claims,
wherein the processing unit has an oven cavity (151), and wherein the thermal protective glazing (1) comprises at least a second transparent sheet (4), wherein the glass or glass ceramic sheet (3) is arranged spaced apart from the second transparent sheet (4), and wherein the glass or glass ceramic sheet (3) facing the oven cavity (151) has an infrared radiation reflecting coating (5).

13. A method for producing a protective glazing (1) according to any one of claims 1 to 9, comprising
providing a glass or glass ceramic sheet (3) which has two opposite faces (30, 32); and applying an infrared reflecting coating (5) onto at least one of said faces (30, 32), by depositing a first layer (7) using a vacuum deposition technology, in particular sputter deposition, and by depositing a second layer (9) onto the first layer (7) using a vacuum deposition technology, in particular sputter deposition, wherein the first layer (7) that is applied is a transparent crystalline oxide layer that is conductive due to being doped and which has a layer thickness in a range from 200 to 600 nanometres and a columnar structure with a longitudinal extension of the columns substantially perpendicular to the surface of the glass or glass ceramic sheet (3), and wherein the second layer (9) that is applied is an amorphous oxide layer or nitride layer.

14. The method for producing a protective glazing (1) according to claim 13, which comprises performing a post-treatment by holding in a furnace, flash lamp annealing using a xenon lamp, by short-wave infrared radiation, or by a laser treatment.

15. Use of a protective glazing (1) according to any one of claims 1 to 9 as a fire protection glazing.

## Revendications

1. Vitrage de protection (1), comprenant
- une vitre en verre ou vitrocéramique (3) transparente dans le domaine spectral visible, comportant deux faces latérales (30, 32) se faisant face,
ainsi que
- sur au moins une des faces latérales (30, 32), un revêtement (5) qui réfléchit le rayonnement infrarouge, le revêtement (5) comprenant une première couche (7) sur la face latérale (30, 32) et une deuxième couche (9) qui est appliquée sur la première couche (7), et la première couche (7) étant constituée d'un oxyde conducteur transparent dopé, et la deuxième couche (9) étant constituée d'une couche d'oxyde ou de nitrure amorphe aux rayons X, **caractérisé en ce que** la première couche (7) a une épaisseur de couche comprise dans la plage allant de 200 à 600 nanomètres, est cristalline et présente une structure à colonnes, la direction longitudinale des colonnes étant sensiblement perpendiculaire à la surface de la vitre en verre ou vitrocéramique (3).

2. Vitrage de protection (1) selon la revendication 1, **caractérisé en ce que** la première couche (7) est une couche d'oxyde de zinc conductrice dopée, et la deuxième couche est une couche d'oxyde contenant de l'aluminium ou une couche de nitrure contenant de l'aluminium.

3. Vitrage de protection (1) selon l'une des revendications précédentes, **caractérisé en ce que** sur au moins une des faces latérales (30, 32) de la vitre en verre ou vitrocéramique (3), une couche intermédiaire (8) est appliquée en tant que revêtement barrière supplémentaire, avant le revêtement (5).

4. Vitrage de protection (1) selon la revendication précédente, **caractérisé en ce que** la couche intermédiaire (8) est une couche contenant de l'aluminium et/ou contenant du silicium, de préférence une couche d'oxyde ou notamment une couche de nitrure, et de façon particulièrement avantageuse une couche de nitrure de silicium et aluminium.

5. Vitrage de protection (1) selon l'une des revendications précédentes, **caractérisé en ce qu'**il présente au moins une des caractéristiques suivantes :
- la première couche (7) est une couche d'oxyde de zinc dopée à l'aluminium, au gallium ou au molybdène,
- la teneur du dopant dans la première couche (7) est comprise entre 0,5 % et 6 %,
- la résistance de surface de la première couche (7) est comprise entre 10 et 20 Ω et est de préférence au maximum de 17 Ω,
- la deuxième couche (9) présente une épaisseur de couche comprise dans la plage allant de 10 à 300 nanomètres, de préférence de 20 à 150 nanomètres,
- la deuxième couche (9) est une couche d'oxyde d'aluminium ou une couche de silicate d'aluminium ou une couche de nitrure de silicium et aluminium.

6. Vitrage de protection (1) selon l'une des revendications précédentes, **caractérisé en ce que** la vitre (3) comprend une vitre en verre ayant subi une trempe thermique ou chimique.

7. Vitrage de protection (1) selon l'une des revendications précédentes, **caractérisé en ce que** le vitrage de protection (1) comprend une deuxième vitre (4) transparente, la vitre en verre ou vitrocéramique (3) étant disposée à distance de la deuxième vitre (4) transparente, de manière à former un espace (6) entre la vitre en verre ou vitrocéramique (3) et la deuxième vitre (4) transparente.

8. Vitrage de protection (1) selon l'une des revendications précédentes, **caractérisé en ce que** sur la face latérale (30, 32) sur laquelle est disposé le revêtement (5) réfléchissant les infrarouges, on applique un décor constitué d'encre céramique décorative (10).

9. Vitrage de protection (1) selon l'une des revendications précédentes, **caractérisé en ce que** la couleur du revêtement (5) se situe dans la gamme de couleurs neutres pour laquelle au moins une des valeurs a, b du système de chromaticité L-a-b est comprise dans la gamme allant de -5 à +5, et la variation de couleur se **caractérise par** ΔE ≤ 3.

10. Unité de traitement thermique (15) comprenant un vitrage de protection (1) thermique selon l'une des revendications précédentes.

11. Unité de traitement thermique (15) selon la revendication précédente, sous la forme
- d'un poêle ou
- d'un four, en particulier doté d'une fonction de nettoyage par pyrolyse, par chauffage du moufle du four à plus de 450 °C, le four comprenant une porte (17) équipée d'un vitrage de protection (1) thermique selon l'une des revendications 1 à 9.

12. Unité de traitement thermique (15) selon l'une des deux revendications précédentes, l'unité de traitement thermique présentant un moufle de four (151), et le vitrage de protection (1) thermique comprenant au moins une deuxième vitre (4) transparente, la vitre en verre ou vitrocéramique (3) étant disposée à distance de la deuxième vitre (4) transparente, et la vitre en verre ou vitrocéramique (3) tournée vers le moufle de four (151) présentant un revêtement (5) qui réfléchit le rayonnement infrarouge.

13. Procédé de fabrication d'un vitrage de protection (1) selon l'une des revendications 1 à 9, selon lequel on fournit une vitre en verre ou vitrocéramique (3) avec deux faces latérales (30, 32) se faisant face, et on applique sur au moins une des faces latérales (30, 32) un revêtement (5) réfléchissant les infrarouges, en déposant une première couche (7) par dépôt sous vide, notamment par pulvérisation cathodique, et en déposant sur la première couche (7), une deuxième couche (9) par dépôt sous vide, notamment par pulvérisation cathodique, où l'on applique comme première couche (7) une couche d'oxyde cristalline transparente, rendue conductrice du fait d'un dopage, avec une épaisseur de couche comprise dans la plage allant de 200 à 600 nanomètres et une structure à colonnes dans laquelle la direction longitudinale des colonnes est sensiblement perpendiculaire à la surface de la vitre en verre ou vitrocéramique (3), et comme deuxième couche (9) une couche d'oxyde ou de nitrure amorphe.

14. Procédé de fabrication d'un vitrage de protection (1) selon la revendication 13, selon lequel on réalise un traitement ultérieur par stockage au four, recuit par lampe éclair à l'aide d'une lampe au xénon, avec un rayonnement infrarouge à ondes courtes ou par traitement au laser.

15. Utilisation d'un vitrage de protection (1) selon l'une des revendications 1 à 9, en tant que vitrage anti-feu.
